# EUROPEAN PATENT SPECIFICATION

(11) **EP 2 551 174 B1**
(45) Date of publication and mention of the grant of the patent: **09.09.2015**
(21) Application number: 12177773.4
(22) Date of filing: 25.07.2012
(51) Int. Cl.: B62D 49/02, B62D 49/06, A01B 59/06, A01B 63/10, B60K 17/28, B60K 25/06, F16H 57/04, B60T 1/06, B62D 53/02, A01B 51/02

(54) **Internal combustion engine equipped single axle rear carriage for agricultural or gardening activities trailable by a self-propelled machine either with a single axle or with at least two axles**
Einachsige mit einem Verbrennungsmotor ausgerüstete hintere Einheit zum Anschluss von Garten- oder Landwirschaftswerkzeuge, von entweder einem einachsigen oder mehrachsigen selbstfahrenden Fahrzeug fortbewegbar.
Unité mono-essieu porte-outils agricole ou de jardinage équipée d'un moteur à combustion interne et remorquable par une unité motrice soit à mono-essieu soit multi-essieux

(30) Priority: 26.07.2011 IT RE20110057
(43) Date of publication of application: 30.01.2013
(73) Proprietor: Officina Meccanica Marte Francesco, 73055 Racale (LE) (IT)
(72) Inventor: Marte, Francesco, 73055 Recale (LE) (IT)
(74) Representative: Robba, Pierpaolo

(56) References cited:
- EP-A2- 0 054 875
- DE-A1- 3 608 527
- FR-A- 1 545 541
- JP-A- 55 022 520
- US-A- 3 779 320
- US-A- 3 828 871
- US-A1- 2003 159 632

## Description

### Technical field

The present invention relates to an engine-driven implement-carrying rear carriage towed by a single axle or multiple axle self-propelled machine with at least two driving wheels.

More particularly, the present invention relates to a rear carriage capable of operating and monitoring the operation of agricultural or gardening implements.

### Prior Art

Agricultural or gardening implements driven by agricultural tractors through a cardan shaft are known in the art. The known implements are generally fastened to a hitch, referred to as three point hitch or linkage, with which the agricultural tractors are equipped.

Wheeled rear carriages are also known, which are to be coupled, in use, to engine-driven cultivators where the tractor transmits both the motion to the wheels and power to a power take-off in the rear carriage.

From patent US3,779,320A an agricultural machine for tilling the soil is also known.
Such a machine comprises a main frame and an independent motor mounted thereon.
The independent motor is arranged to drive rotatable ground-engaging agricultural implements.

The Applicant has realised that, generally, prior art solutions or provide for transmitting both the motion to the wheels and the power to the power take-off or provide for driving ground-engaging agricultural implements by means of an independent motor mounted on an independent frame.

However all the prior art solutions are rather complex technical solutions, for which both permanently keeping the rear carriage or the implement in the operating configuration is almost mandatory and controlling the agricultural implements is very complex.

### Description of the invention

It is the object of the present invention to provide an engine-driven rear carriage capable of solving the problems mentioned above of the prior art.

The object is achieved by means of the engine-driven implement-carrying rear carriage for agricultural activities as claimed herein.

The following synthetic description of the invention is given in order to provide a basic understanding of some aspects of the invention.

This synthetic description is not a thorough description and, as such, it is not to be intended as capable of identifying key or critical elements of the invention, or as capable of setting forth the object of the invention. The only purpose thereof is to set forth some concepts of the invention in simplified form, as an anticipation of the detailed description that follows.

In accordance with the invention, the rear carriage includes an engine and the wheels of the rear carriage according to the invention are idle, whereby the forward movement speed taken by the rear carriage is the speed of the machine or vehicle to which it is coupled.

In particular, if the rear carriage is coupled to a single-axle machine such as an engine-driven cultivator or hoeing machine, equipped with an engine and with wheels, the rear carriage is equipped with a seat for the operator. In such case, the whole of the engine-driven cultivator and the rear carriage is configured like a hybrid tractor with steering handlebar (plough-stilts) and two distinct engines.

In accordance with the present invention, the operational capacity of the whole mainly depends on the power of the engine mounted on the rear carriage, but it is also conditioned by the forward movement capacity of the single axle machine, which capacity is to be suited to the kind of implement and to the quality of the work to be carried out.

The same considerations apply when the towing vehicle has two or more axles. The vehicle type may vary for instance from a small gardening tractor to a quad or to a generic off-road vehicle.

In such embodiments, the rear carriage could be used as a trailer towed by an actual tractor, i.e. a tractor complete with power take-off, lifting device and three point linkage.

Such a further embodiment could be convenient when the power of the rear carriage according to the invention exceeds the power of the towing tractor. Indeed, such a configuration would allow having a higher useful power available at the implement.

The rear carriage according to the invention also is characterised both as an assembly arranged to convert a single-axle machine into a hybrid form of a tractor, and as a means capable of extending the operating capability of certain vehicles or tractors lacking in equipment (for instance, lacking a power take-off).

In any case, the operation of the implement for agricultural or gardening activities is independent of the forward movement and the kind of vehicle by which the rear carriage is towed and the control of the rotation speed of both engines, and hence of the power supplied, takes place depending on the actual operation needs.

In accordance with another feature of the present invention, the rear carriage includes an implement-carrying three point linkage with hydraulic lifting facilities.

In accordance with a further feature of the present invention, the rear carriage includes a transmission casing assembly acting as a reservoir for oil intended to serve both as a lubricant and as a supply for the lifting means of the three point linkage or yet for other functions for which suitable hydraulic drives are to be provided.

In accordance with yet another feature of the present invention, the rear carriage includes two wheel shafts carrying at their ends wheels with a keying system arranged to provide variable track widths.

In accordance with another feature of the present invention, the rear carriage includes a braking system arranged to separately operate on each wheel shaft, whereby it is not to follow the wheel during its translation.

In accordance with a further feature of the present invention, the rear carriage includes a drawbar having an end portion shaped with a coupling suitable for the kind of towing vehicle.

The rear carriage according to the invention can be readily applied to engine-driven hoeing machines and cultivators, and bringing back such machines to their original configuration is extremely simple.

Moreover, the rear carriage according to the invention can be widely applied to vehicles with two or more axles, for which the application of agricultural and gardening implements discussed above and the execution of the corresponding activities would be otherwise inconceivable.

### Brief Description of the Figures

The above and other features and advantages of the present invention will become apparent from the following description of preferred embodiments made by way of non limiting example with reference to the accompanying Figures, in which elements denoted by a same or similar numerical reference correspond to components having the same or similar function and construction, and in which:

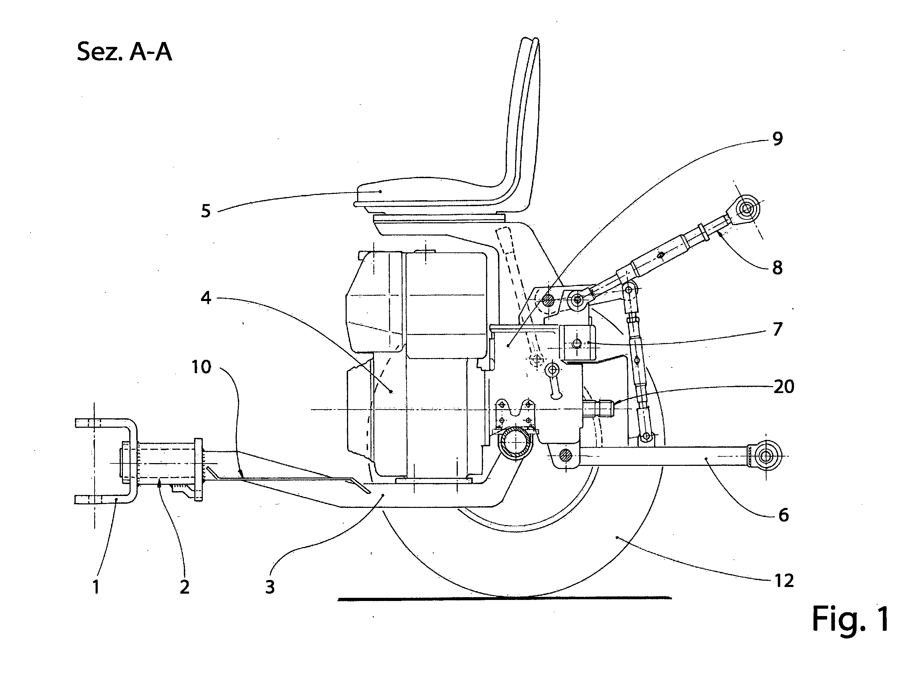

- Fig. 1 is a longitudinal sectional view of a rear carriage assembly, wherein the section plane is chosen so as to remove the external wheel that, otherwise, would cover the whole assembly;
   Fig. 2 shows the rear carriage assembly of Fig. 1 coupled to a single-axle machine through a drawbar configured for that purpose;
   Fig. 3 shows the rear carriage assembly of Fig. 1, from which the seat has been removed since it is superfluous, coupled to a typical small tractor for gardening, which usually is equipped in its bottom part with a grass-mowing assembly and drives it through a belt transmission;
   Fig. 4 is a longitudinal sectional view of the transmission assembly of the rear carriage assembly;
   Fig. 5 is a transversal view of the wheel axle of the rear carriage assembly, highlighting in particular the braking system and the kind of keying allowing the variation of the track width of the wheels; and

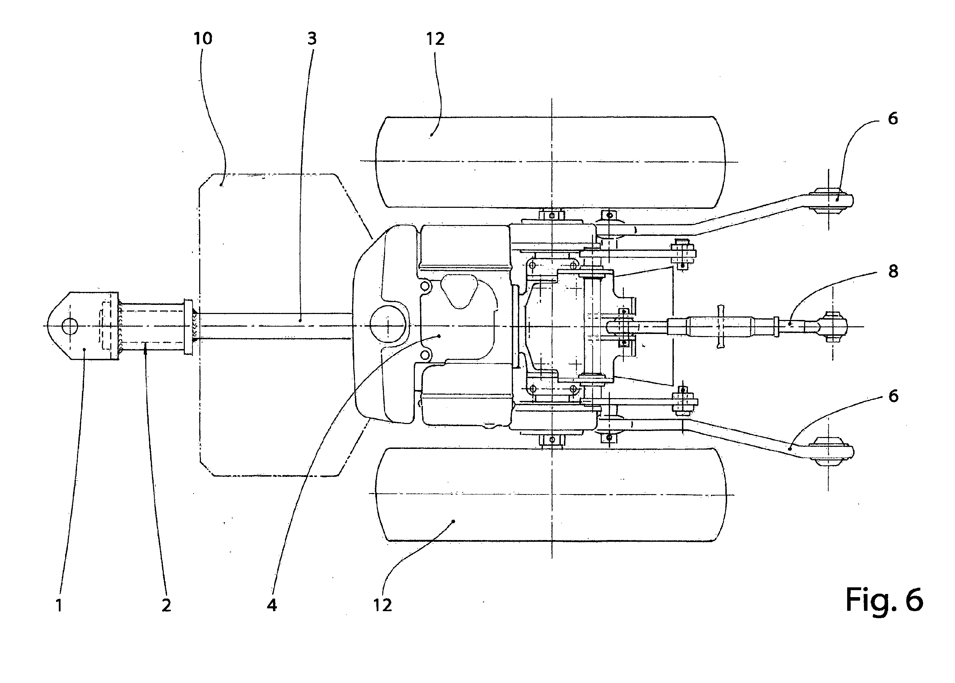

- Fig. 6 is a top view of the rear carriage assembly in which the representation of the seat has been omitted in order to show the details of the assembly itself.

In the drawings, elements of the body or protective elements such as casings, wings and so on have been omitted, since they would have made the graphical representation of the rear carriage assembly according to the invention less apparent.

### Description of Preferred Embodiments

The engine-driven rear carriage assembly comprises, in the preferred embodiment, an internal combustion engine (4), a transmission casing (9), a transversal axle with an associated pair of wheels (12), and a drawbar (3) the end portion of which is equipped with a transversal articulated joint (2) and a fork (1).

A shaft (20), referred to as a power take-off (in short, in the international jargon, P.T.O.) projects from the transmission casing (9). The casing also serves as a fastening structure for the elements forming the "three-point implement-carrying linkage" (or three-point implement hitch), defined as the whole of two lower arms (6) and an adjustable rod (8) (third point).

Both arms (6) are connected to a hydraulic lifting system, which is wholly similar to the ones employed on all-purpose tractors. The description of such system is omitted since the system belongs to the prior art.

As to the geometry and the size of the three point linkage, reference is made to the technical standards specific for the agricultural all-purpose tractors; the same applies to the shape, the size, the rotation direction and the speed of the P.T.O. shaft.

The internal combustion engine (4) may be conveniently chosen from the commercially available kinds complete with accessories, i.e. engines ready to operate, in other words, engines equipped with fuel tank, air filter, silencer, cooling system, starting system, etc.

Preferably, as a further requirement for the engine, there is the possibility of flanging it either directly with the transmission casing or through the simple interposition of a coupling flange.

Preferably, the drive shaft (19) is used directly as a power source and the pinion (14) is keyed thereon.

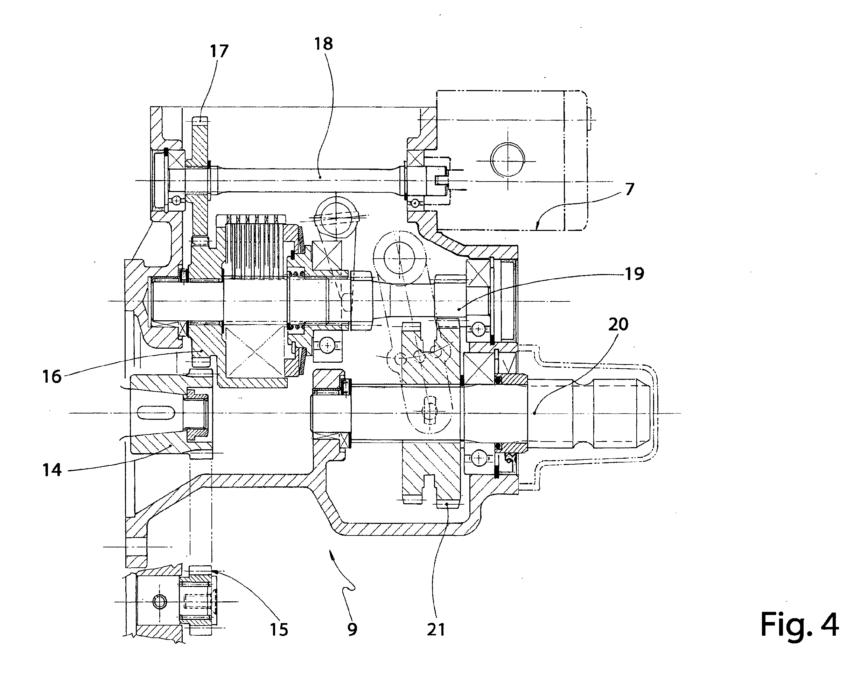

In the exemplary embodiment disclosed, a kinematic chain composed of cascaded gears (Fig. 4) is provided in order to transmit the motion to a drive, preferably in top or high position, on which a hydraulic pump (7) is flanged. For instance, starting from the drive pinion (14), an idle pinion (15), a ring gear (16) and a gear (17) are involved, in the order, in motion transmission: these gears are always meshing, so that the hydraulic pump (7), in accordance with the example, is always operating when the engine is on.

A clutch bowl, integral with the ring gear (16), receives, for instance, a multiple-plate clutch which can be engaged in a steady manner through a conventional control unit equipped with a lever system with a pivot control mechanism of known type.

In the preferred embodiment, both toothed pinions (14, 15) formed on shaft (19) can alternately mesh with the teeth sets of a slidable double gear (21). In such an embodiment, the selection takes place, when the clutch is disengaged or the engine is off, by positioning the gear (21) in the respective meshing positions. Thus, two different reduction ratios are obtained for the corresponding rotation speed of the P.T.O.

Rotation of and power transmission to the P.T.O. take place upon engagement of the clutch.

In the preferred embodiment, motion transmission to the drive of the hydraulic pump (7) is independent of the selection and/or the engagement of the P.T.O.

Preferably, the hydraulic pump (7) uses the oil contained in the transmission casing, which therefore acts also as a tank for the hydraulic circuit. The function of the hydraulic circuit is mainly to ensure the lifting of the implement connected to the three point linkage and to control the implement positioning and lowering.

As a skilled in the art can readily understand, other hydraulic functions, for which control distributors and respective supplementary hydraulic drives will have to be provided, are not excluded a priori.

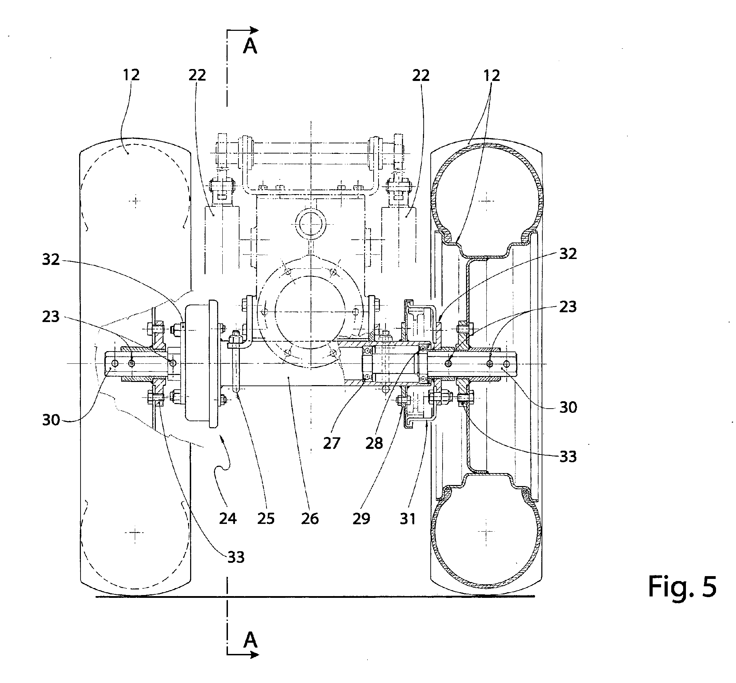

The rear carriage assembly, in the preferred embodiment, is equipped with a robust wheel axle (Fig. 5), consisting of a tube (26) which is firmly fastened to the transmission casing through tie-rods (25) or equivalent mechanical fastening systems.

Housings for bearings (27) and (28) supporting a wheel shaft (30) comprising a plurality of pins (23) are formed in the tube (26), at both sides thereof. The shaft, in its portion external to the axle tube, has a cross-section with hexagonal profile, and both a wheel-holding flange or bushing (33) and a flange (32) supporting a brake drum (31) are in engagement with such a profile.

The wheels (12) and the brake drum (31), even though independent of each other, are mutually torsionally connected by means of a prismatic coupling (hexagonal in the example) capable of transmitting the braking torque from the drum to the wheel.

Such a constructional solution allows shifting the wheel (12) on the shaft (30) in order to vary the track width. It is sufficient to provide a set of holes on the shaft (30) and/or on the bushing (33) in order to have different measures of the track width.

Once the bushing positions have been chosen, the bushings (33) are secured by means of the locking pins (23).

The braking assembly (24) is for instance, as shown by way of example in Fig. 5, of the kind with shoes expansible on the drum, and the shoe-carrying flange is mechanically secured on a flanged projection (29) of the axle.

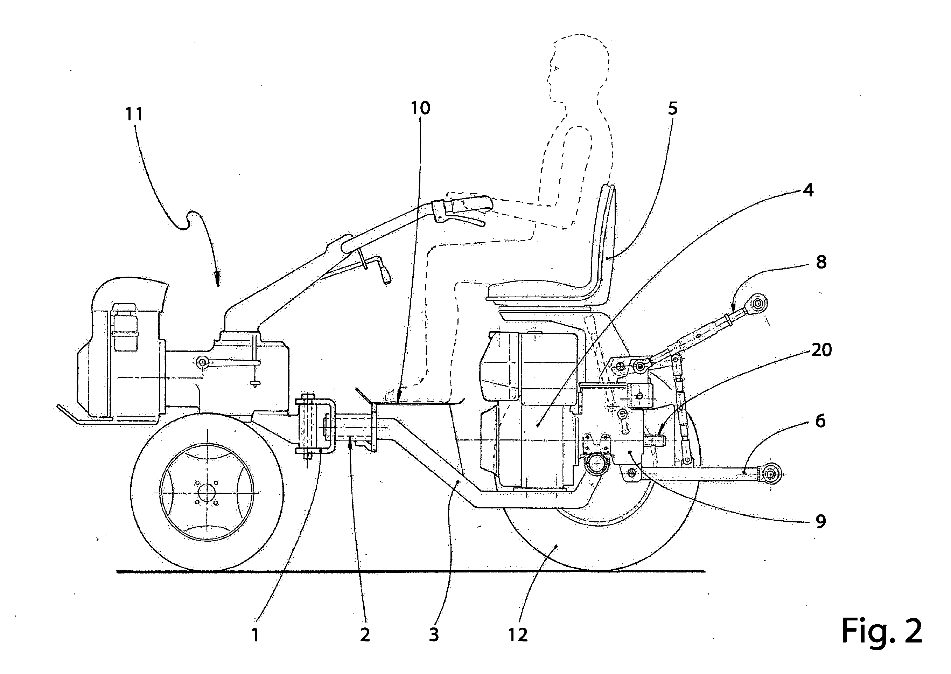

The provision of the brakes is indispensable in case the rear carriage is coupled to a single-axle vehicle (Fig. 2), with the driver sitting on the carriage to drive the whole of the single-axle vehicle and the rear-carriage assembly. In this case, the brakes act as service brakes, emergency brakes and also parking brakes.

In case of towing by a vehicle with two or more axles, the brakes mainly operate as emergency and parking brakes.

The drawbar (3) extends from the axle (26) to which it is firmly secured, and then it is suitably stiffened by means of a plate connecting it to the base of the internal combustion engine (4). Preferably, the end portion of the drawbar is to be configured depending on the vehicle to which it is coupled.

More particularly, different constructional solutions can be adopted: it may be suitable to provide a system of which both the length and the height are adjustable, or to provide interchangeable elements dedicated to the specific vehicle.

Independently of the solution adopted, there are to be provided a freedom degree by means of an articulation on the horizontal axis (2), in order to follow the transverse undulations of the ground, as well as a vertical axis articulation, located for instance on the fork (1) and acting as a steering articulation.

The experience and/or the field tests suggest then the choice of the corresponding oscillation amplitudes and the positioning of the corresponding safety locks.

Referring to Fig. 2, let we assume that a generic implement is applied to the three point linkage. The weight of the cantilevered implement causes a longitudinal unbalance that is wholly or partly counterbalanced by the weight of the internal combustion engine and of the driver. Such unbalance disappears when implements operating in floating modality, i.e. leant on the ground, are used, but it occurs again as soon as the implement is lifted again. The situation is sometimes worsened by the additional weight due to the accumulation of material (earth, grass, etc.) inside the protecting casings.

In any case, stability can be ensured by the reaction of the fork (1), which discharges the force on the forecarriage that, if necessary, can be suitably ballasted.

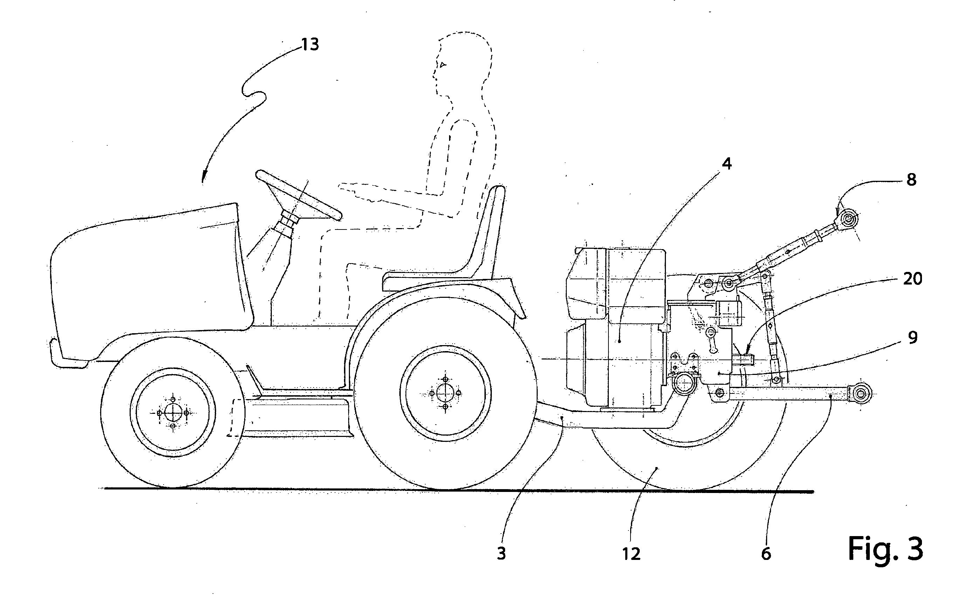

The same measures can be taken in case of towing by a vehicle with two or more axles (Fig. 3).

From the operational point of view, the engine-driven rear carriage operates as an agricultural tractor: the implement is fastened to the three point linkage, is connected to the P.T.O. by means of the cardan shaft, is made to rotate by engaging the clutch, is lowered by means of the lifting system in order to operate in the ground, etc.

The complete independence of the implement rotation from the forward movement is underlined here: this means that, if the operator perceives a high effort of the implement (reduction of the speed of the rear carriage engine), the operator can supply the engine with power and, if the engine is already operating at its maximum speed, the operator can act on the forward movement by reducing it even down to zero.

Advantageously, by means of a temporary stop, the rotating implement is allowed to discharge accumulated working material, if any, this being assisted by small interventions on the lifting system.

The independence of the power take-off from the forward movement is an important feature achieved: this is mainly due to the provision of the ancillary internal combustion engine, which makes the rear carriage an autonomously controllable power unit.

Several constructional modifications can be made in the rear carriage assembly as described above and having the constructional embodiment shown in the more detailed drawings, such as in Figs. 4 and 5. The embodiment shown is characterised by good technique, compactness, high mechanical efficiency, compliance with the standards for both the P.T.O. shaft and the three point linkage.

However, for particular operational requirements, it is possible that the construction departs from some constructional aspects and from some standards. However, the novel features residing in the autonomous functionality the rear carriage assembly, in the specific power source for the P.T.O. and the hydraulic pump, in the independence of the hydraulic pump from the P.T.O., in the possibility of application on tow by self-propelled machines and in the independence of the P.T.O. from the forward movement, are maintained.

Of course, obvious changes and/or modifications to the above description in respect of the size, the shape and the materials, as well as in respect of the details of the illustrated construction and the operating manner are possible without departing from the invention which is defined by the following claims.

## Claims

1. Implement-carrying rear carriage comprising:
- an internal combustion engine or ICE (4), preferably of the power pack kind, i.e. complete with silencer, fuel tank, cooling circuit, electrical and/or manual starting system;
- a transmission casing assembly (9) to which the internal combustion engine is directly flanged and from which a power take-off shaft projects at the rear, i.e. on the opposite side to the engine;
- a three point implement-carrying linkage;
- a connecting drawbar (3) featuring a coupling system equipped with a steering articulation on a fork (1);
- a single axle (26),
said power take-off shaft being arranged to power agricultural implements and to allow a fast implement replacement, whereby:
- if said rear carriage is coupled, in use, to a single axle self-propelled machine (11), a vehicle of the hybrid tractor kind is formed since two independent power sources are provided, where the engine of the self-propelled machine causes the forward movement, the engine of the rear carriage supplies the power take-off with power and the implement is defined as a mounted implement;
- if said rear carriage is coupled, in use, to a self-propelled vehicle (13) with two or more axles, the driver, while sitting on said vehicle, controls the way the vehicle is driven and controls the functions of the rear carriage being towed, the rear carriage and the implement mounted thereon forming an operating machine that is defined as a towed machine;
- in both cases, the operation of the implement for agricultural or gardening activities is independent of the forward movement and the kind of vehicle by which the rear carriage is towed and vice versa;
said rear carriage being **characterised in that** it further comprises
- a driver's seat (5) and footboard (10),
- **in that** the single axle (26) supports two idle shafts (30) with respective braking systems (24) and is equipped at its ends with a pair of wheels (12) having a keying system arranged to provide variable track widths;
**in that**
- said coupling system is further equipped with a transverse joint (2); and **in that**
- when said rear carriage is coupled, in use, to the single axle self-propelled machine (11), the driver, while sitting on the seat (5), controls the way the self-propelled machine (11) is driven and controls the functions of the rear carriage on which he is sitting.

2. The ICE equipped rear carriage as claimed in claim 1, wherein the power take-off shaft is a grooved profile shaft (20) with size, speed and rotation direction conforming to the standards for agricultural tractors.

3. The ICE equipped rear carriage as claimed in claim 1 or 2, wherein the three point implement-carrying linkage comprises an adjustable rod (8) and lower arms (6) with a hydraulic lifting system, operable by means of a hydraulic pump (7) and cylinders (22).

4. The ICE equipped rear carriage as claimed in any one of claims 1 to 3, wherein the transmission casing assembly (9) is a mechanical assembly with a structural cast iron casing and with oil-cooled gears and multiple-plate clutch.

5. The ICE equipped rear carriage as claimed in claim 3 or 4, wherein the transmission casing assembly (9) acts as an oil tank and said oil acts both as a lubricant and as a supply for the hydraulic circuit for the lifting system of the three point linkage.

6. The ICE equipped rear carriage as claimed in any one of claims 3 to 5, wherein the transmission casing assembly (9) includes a transmission kinematic chain or gear train including a drive pinion (14), a reverse transmission gear (15), a ring gear (16) on a clutch bowl, a shaft with double-pinion (19), a sliding gear (21) for the power take-off, a hydraulic pump drive gear (17), the gear train being configured so that the power take-off is operable according to at least two different ratios, which can be engaged and disengaged by means of a control on a clutch, and wherein the hydraulic pump (7) is directly driven by the gear train independently of whether the power take-off clutch is engaged or disengaged.

7. The ICE equipped rear carriage as claimed in any one of preceding claims, including a wheel axle comprising a tube-shaped fixed portion (26), which is securely fastened to the transmission casing assembly by means of tie rods or equivalent systems (25) and which has formed at its ends inner housings for bearings (27, 28) respectively supporting each wheel shaft (30) and a outer flange (29) supporting the braking system.

8. The ICE equipped rear carriage as claimed in claim 7, wherein the braking system (24) acts on the wheel shaft (30) through a drum (31) rigidly connected to the shaft by means of a flanged hexagonal bushing (32), and wherein the wheel is also flanged on a hexagonal hub (33) and it can be manually shifted and positioned by means of an associated pin (23) in a plurality of holes provided for allowing a discrete variation of the track width or, in the alternative, by means of a screw-type continuous adjustment system centrally arranged on the wheel axle.

9. The ICE equipped rear carriage as claimed in any one of preceding claims, wherein the connecting drawbar (3) has a construction such as to be rigidly connected to the axle and to the engine, is shaped depending on the type of internal combustion engine installed and has an end portion equipped with a coupling arranged to have the degrees of freedom for a transverse articulation (2) and an articulation (1) about a vertical axis, for steering purposes.

## Patentansprüche

1. Arbeitsgerät tragender Anhänger mit:
- einem Verbrennungsmotor (4), vorzugsweise des Antriebsaggregattyps, d.h. vollständig mit Auspufftopf, Treibstofftank, Kühlkreis, elektrischem und/oder manuellem Startsystem;
- einer Getriebegehäusebaugruppe (9), an welche der Verbrennungsmotor direkt angeflanscht ist und von der hinten eine Zapfwelle absteht, d.h. auf der gegenüberliegenden Seite des Motors;
- einer Arbeitsgerät tragenden Dreipunktkupplung;
- eine verbindenden Deixel (3), die ein Kupplungssystem aufweist, das mit einer Knicklenkung an einer Gabel (1) ausgerüstet ist;
- einer einzelnen Achse (26),
wobei die Zapfwelle dafür vorgesehen ist, landwirtschaftliches Arbeitsgerät anzutreiben und einen schnellen Austausch des Arbeitsgeräts zu ermöglichen, wobei:
- wenn der Anhänger im Betrieb an eine einachsige Zugmaschine (11) angekoppelt ist, ein Fahrzeug von der Art eines Hybridtraktors gebildet ist, da zwei unabhängige Antriebe vorhanden sind, wobei der Motor der Zugmaschine die Vorwärtsbewegung bewirkt, der Motor des Anhängers die Zapfwelle antreibt und das Arbeitsgerät als montiertes Arbeitsgerät definiert ist;
- wenn der Anhänger im Betrieb an eine Zugmaschine mit zwei oder mehr Achsen angekoppelt ist, der Fahrer, wenn er in der Zugmaschine sitzt, steuert, wie die Zugamschine fährt, und die Funktion des geschleppten Anhängers steuert, wobei der Anhänger und das daran montierte Arbeitsgerät eine Arbeitsmaschine bilden, die als eine geschleppte Arbeitsmaschine definiert ist;
- in beiden Fällen der Betrieb des Arbeitsgeräts für landwirtschaftliche Arbeiten oder Gartenarbeiten von der Vorwärtsbewegung und der Art der Zugmaschine, von welcher der Anhänger geschleppt wird, unabhängig ist und umgekehrt;
wobei der Anhänger **dadurch gekennzeichnet ist, dass** er zusätzlich aufweist
- einen Fahrersitz (5) und ein Trittbrett (10);
dass die einzige Achse (26) zwei freie Wellen (30) mit entsprechenden Bremssystemen (24) trägt und an ihren Enden mit einem Paar Räder (12) versehen ist, die ein Verschlusssystem aufweisen, das dafür vorgesehen ist, unterschiedliche Spurweiten zu ermöglichen;
dass
- das Kupplungssystem zudem mit einem Transversalgelenk ausgestattet ist, und
- wenn der Anhänger im Betrieb an die einachsige Zugmaschine (11) angekoppelt ist, der Fahrer, während er auf dem Sitz (5) sitzt kontrolliert, wie die Zugmaschine (11) fährt und auch die Funktionen des Anhängers, auf dem er sitzt.

2. Anhänger mit Verbrennungsmotor nach Anspruch 1, wobei die Zapfwelle eine Rillenprofilwelle (20) ist, deren Größe, Geschwindigkeit und Drehrichtung den Standards landwirtschaftliche Traktoren entsprechen.

3. Anhänger mit Verbrennungsmotor nach Anspruch 1 oder 2, wobei die Arbeitsgerät tragende Dreipunktkupplung eine einstellbare Stange (8) und untere Arme (6) mit einem hydraulischen Hebesystem aufweist, das mittels einer hydraulischen Pumpe (7) und Zylindern (22) betrieben werden kann.

4. Anhänger mit Verbrennungsmotor nach einem der Ansprüche 1 bis 3, wobei die Getriebegehäusebaugruppe (9) eine mechanische Baugruppe mit einem Konstruktionsgussgehäuse aus Eisen und mit Öl gekühltem Getriebe und einer Mehrscheibenkupplung ist.

5. Anhänger mit Verbrennungsmotor nach Anspruch 3 oder 4, wobei die Getriebegehäusebaugruppe (9) als ein Öltank wirkt und das Öl sowohl als Schmiermittel also auch als Vorrat für den hydraulischen Kreis des Hebesystems der Dreipunktkupplung dient.

6. Anhänger mit Verbrennungsmotor nach einem der Ansprüche 3 bis 5, wobei die Getriebegehäusebaugruppe (9) eine mechanische Transmissionsgliederkette oder ein Zahnradgetriebe aufweist, was ein Antriebsritzel (14), ein Rückwärtsübersetzungsgetriebe (15), einen Zahnkranz (16) auf einer Kupplungsschale, eine Welle mit Doppelritzel (19), ein Stirnradgetriebe (21) zur Kraftübertragung, ein Antriebsrad (17) der hydraulischen Pumpe einschließt, wobei das Zahnradgetriebe so konfiguriert ist, dass die Kraftübertragung mit mindestens zwei verschiedenen Übersetzungsverhältnissen betrieben werden kann, die mittels einer Steuerung einer Kupplung eingelegt und gelöst werden können, und wobei die hydraulische Pumpe (7) direkt von dem Zahnradgetriebe angetrieben wird, unabhängig davon, ob die Antriebskupplung eingelegt oder gelöst ist.

7. Anhänger mit Verbrennungsmotor nach einem der vorstehenden Ansprüche, mit einer Radachse, die ein rohrförmigen befestigten Abschnitt (26) aufweist, der mittels Zugankern oder entsprechenden Systemen (25) fest an der Getriebegehäusebaugruppe befestigt ist und der an seinen Enden jeweils Innengehäuse für Lager (27, 28) für jede Radwelle (30) und einen äußeren Flansch (29) zum Stützen des Bremssystems aufweist.

8. Anhänger mit Verbrennungsmotor nach Anspruch 7, wobei das Bremssystem (24) auf die Radwelle (30) über eine Trommel (31) einwirkt, die mittels einer hexagonalen Flanschbuchse starr an der Welle befestigt ist, und wobei das Rad zudem an eine hexagonale Nabe (33) angeflanscht ist und manuell verschoben und mittels eines zugeordneten Stifts (23) in mehreren Löchern positioniert werden kann, die dafür vorgesehen sind, eine diskrete Einstellung der Spurweite zu ermöglichen, oder alternativ mittels eines schraubenartigen kontinuierlichen Einstellsystems, das zentral an der Radachse angeordnet ist.

9. Anhänger mit Verbrennungsmotor nach einem der vorstehenden Ansprüche, wobei die verbindende Zugstange (3) derart konstruiert ist, dass sie starr mit der Achse und dem Verbrennungsmotor verbunden ist, gemäß dem Typ des installierten Verbrennungsmotors geformt ist und einen Endabschnitt aufweist, der mit einer Kupplung ausgestattet ist, die dafür vorgesehen ist, Freiheitsgrade für eine transversale Beweglichkeit (2) und eine Beweglichkeit (1) um eine vertikale Achse für Lenkzwecke zu ermöglichen.

## Revendications

1. Arrière-train porte-outils comprenant:
- un moteur à combustion interne ou MCI (4), de préférence du type soi-disant « power pack », c'est-à-dire pourvu de silencieux, réservoir de carburant, circuit de refroidissement, système de démarrage électrique et/ou manuel;
- un ensemble de carter de transmission (9), auquel le moteur à combustion interne est directement bridé et duquel sort sur le côté arrière, c'est-à-dire sur le côté opposé par rapport au moteur, un arbre de prise de puissance ou de force;
- un couplage porte-outils du type à trois points;
- une barre d'attelage de liaison (3) comportant un système d'accouplement munie d'une articulation de direction sur une fourche (1);
- un seul essieu (26);
ledit arbre de prise de puissance étant arrangé pour fournir de puissance à des outils agricoles et pour permettre un remplacement rapide de ceux-ci, de sorte que:
- si ledit arrière-train est couplé, pendant son utilisation, à une machine automotrice mono-essieu (11), un véhicule du type tracteur hybride est obtenu comme deux sources de puissance indépendantes sont fournies, dans lequel le moteur de la machine automotrice provoque le mouvement d'avancement, le moteur de l'arrière-train fournit la puissance à la prise de puissance et l'outil est défini comme un outil porté;
- si ledit arrière-train est couplé, pendant son utilisation, à un véhicule automoteur (13) à deux ou plusieurs essieux, le conducteur, tout en restant assis sur ledit véhicule, contrôle la façon dans laquelle le véhicule est conduit et il contrôle les fonctions de l'arrière-train qui est tracté, l'arrière-train et l'outil qui est monté sur celui-ci formant une machine opératrice qui est définie comme une machine tractée;
- dans les deux cas, le fonctionnement de l'outil pour activités agricoles ou de jardinage est indépendant du mouvement d'avancement et du type de véhicule par lequel l'arrière-train est tracté et vice versa;
ledit arrière-train étant **caractérisé en ce qu'**il comprend en outre
- un siège (5) et une estrade repose-pied (10) pour le conducteur;
**en ce que** le seul essieu (26) soutient deux arbres fous (30) avec des systèmes de freinage respectifs (24) et il est équipé à ses extrémités d'une paire de roues (12) comportant un système de calage agencé pour fournir des largeurs de voie variables;
**en ce que**
- ledit système d'accouplement est en outre pourvu d'un joint transversal (2) ;
et **en ce que**
- quand ledit arrière-train est couplé, pendant son utilisation, à la machine automotrice mono-essieu (11), le conducteur, tout en restant assis sur le siège (5), contrôle la façon dans laquelle le véhicule est conduit et il contrôle les fonctions de l'arrière-train sur lequel il est assis.

2. Arrière-train équipé d'un MCI selon la revendication 1, dans lequel l'arbre de prise de puissance est un arbre à profil rainuré (20) ayant une taille, une vitesse et un sens de rotation conformes aux normes pour les tracteurs agricoles.

3. Arrière-train équipé d'un MCI selon la revendication 1 ou 2, dans lequel le couplage porte-outils à trois points comporte une tige réglable (8) et des bras inférieurs (6) avec un système de relevage hydraulique, pouvant être actionné par une pompe hydraulique (7) et des cylindres (22).

4. Arrière-train équipé d'un MCI selon l'une quelconque des revendications 1 à 3, dans lequel l'ensemble de carter de transmission (9) est un ensemble mécanique ayant un carter structurel en fonte ainsi que des engrenages refroidis par huile et un embrayage multidisque.

5. Arrière-train équipé d'un MCI selon la revendication 3 ou 4, dans lequel l'ensemble de carter de transmission (9) agit comme un réservoir d'huile et ladite huile agit à la fois comme lubrifiant et comme alimentation pour le circuit hydraulique pour le système de relevage du couplage à trois points.

6. Arrière-train équipé d'un MCI selon l'une quelconque des revendications 3 à 5, dans lequel l'ensemble de carter de transmission (9) comporte une chaîne cinématique de transmission ou un train d'engrenages comprenant un pignon entraîneur (14), un pignon inverseur de renvoi (15), une couronne dentée (16) sur une cloche d'embrayage, un arbre à double pignon (19), un pignon baladeur (21) pour la prise de puissance, un engrenage d'entraînement de la pompe hydraulique (17), le train d'engrenages étant configuré de sorte que la prise de puissance peut fonctionner selon au moins deux rapports différents, qui peuvent être engagés et désengagés au moyen d'un contrôle d'un embrayage, et dans lequel la pompe hydraulique (7) est entraînée directement par le train d'engrenages indépendamment du fait que l'embrayage de la prise de puissance soit engagé ou bien désengagé.

7. Arrière-train équipé d'un MCI selon l'une quelconque des revendications précédentes, comportant un essieu de roue comprenant une partie fixe en forme de tube (26), qui est solidement fixée à l'ensemble de carter de transmission par des tirants ou des systèmes équivalents (25) et aux extrémités de laquelle sont formés des logements internes pour des roulements (27, 28) supportant respectivement chaque arbre de roue (30) et une bride externe (29) supportant le système de freinage.

8. Arrière-train équipé d'un MCI selon la revendication 7, dans lequel le système de freinage (24) agit sur l'arbre de roue (30) à travers un tambour (31) rigidement relié à l'arbre par l'intermédiaire d'une douille hexagonale bridée (32), et dans lequel la roue est également bridée sur un moyeu hexagonal (33) et elle peut être déplacée manuellement et positionnée au moyen d'un goujon (23) associé dans une pluralité de trous prévus pour permettre une variation discrète de la largeur de voie ou, en variante, au moyen d'un système de réglage en continu du type à vis agencé en position centrale sur l'axe de roue.

9. Arrière-train équipé d'un MCI selon l'une quelconque des revendications précédentes, dans lequel la barre d'attelage de liaison (3) présente une structure telle à être reliée rigidement à l'essieu et au moteur, elle a un forme qui dépend du type de moteur à combustion interne installé et elle comporte une partie d'extrémité pourvue d'un accouplement agencé de manière à avoir les degrés de liberté pour une articulation transversale (2) et pour une articulation (1) autour d'un axe vertical, à des fins de direction.
